# FASCICULE DE BREVET EUROPEEN

(11) **EP 3 772 380 B1**
(45) Date de publication et mention de la délivrance du brevet: **04.09.2024**
(21) Numéro de dépôt: 20188889.8
(22) Date de dépôt: 31.07.2020
(51) Int. Cl.: B05D 7/02, B05D 3/06, B05D 5/06, B05D 7/00, B44C 1/22, B44C 3/00

(54) **PROCÉDÉ DE FABRICATION D'UNE PIÈCE DE VÉHICULE TRANSPARENTE**
VERFAHREN ZUR HERSTELLUNG EINES TRANSPARENTEN FAHRZEUGTEILS
METHOD FOR MANUFACTURING A TRANSPARENT VEHICLE PART

(30) Priorité: 05.08.2019 FR 1908968
(43) Date de publication de la demande: 10.02.2021
(73) Titulaire: OPmobility SE, 69007 Lyon (FR)
(72) Inventeur: VIDAL, Sophie, 01150 SAINTE-JULIE (FR); GUILLIER, Stéphane, 01150 SAINTE-JULIE (FR)
(74) Mandataire: LLR

(56) Documents cités:
- EP-A1- 0 590 194
- EP-A1- 3 530 476
- EP-A2- 2 006 119
- WO-A1-01/39991
- WO-A1-2006/025016
- DE-A1- 102016 214 644
- DE-A1- 19 702 977
- DE-A1- 19 715 702

## Description

L'invention concerne une pièce de véhicule automobile. Plus particulièrement, l'invention concerne un procédé de fabrication d'une pièce de véhicule transparente et contribuant à l'aspect extérieur du véhicule.

Un véhicule comprend plusieurs pièces transparentes destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumières prévues à des fins décoratives qui améliorent l'esthétique du véhicule.

A ces fins, il est possible de traiter une surface externe des pièces transparentes afin d'améliorer leur aspect. Une possibilité pour ce faire consiste à surmouler un film sur la surface externe de la pièce transparente, le film présentant un motif opaque prédéfini. De la sorte, lorsque la source de lumière associée à la pièce transparente émet de la lumière, cette dernière est partiellement bloquée par l'opacité du motif et transmise par les parties de la pièce qui ne sont pas recouvertes par le motif. Cela permet d'améliorer l'esthétique du faisceau lumineux transmis, par la pièce transparente, de la source de lumière vers l'environnement extérieur. Une autre possibilité consiste à décorer la pièce transparente par peinture et marouflage, ce qui permet d'obtenir un résultat similaire.

Ces options sont intéressantes mais peuvent poser problème. En effet, un film tel que décrit ci-dessus peut poser des problèmes de correspondance de couleur avec la peinture du véhicule, ce qui a un impact négatif sur l'esthétique du véhicule. De plus, l'application du film selon l'une des manières présentées ci-dessus peut ne pas permettre d'obtenir un motif d'une précision aussi élevée que souhaitée. Le document EP 0 590 194 A1 divulgue un procédé de traitement de surface d'une pièce impliquant le dépôt d'une couche de peinture puis la gravure de cette couche, mais ce procédé pose des difficultés de mise en oeuvre qui rendent cette solution non-satisfaisante.

L'invention a notamment pour but de remédier à ce problème en proposant un procédé ne posant pas de problème de correspondance de couleur avec la peinture du véhicule et qui soit plus précis que celui de l'art antérieur.

A cet effet, on prévoit selon l'invention un procédé de fabrication d'une pièce de véhicule comprenant les étapes suivantes :
- on applique une première couche de vernis sur une pièce transparente,
- on applique une couche de peinture sur la première couche de vernis,
- on applique une seconde couche de vernis sur la couche de peinture, et
- on irradie partiellement la couche de peinture et la seconde couche de vernis avec un rayonnement laser de manière à graver la couche de peinture et la seconde couche de vernis.

On peut ainsi appliquer la peinture sur toute la surface de la pièce transparente puis la retirer par gravure à l'aide du rayonnement laser selon un motif prédéfini choisi. On comprend que le laser permet de retirer la peinture afin d'obtenir un rendu plus précis qu'en mettant en oeuvre l'un des procédés de l'art antérieur. De plus, le fait que la couleur du revêtement soit donnée par de la peinture et non par un film comme dans l'art antérieur, il est possible de choisir une peinture qui corresponde à celle utilisée pour la carrosserie du véhicule. Il s'ensuit qu'aucun problème de correspondance de couleur ne se pose.

L'agencement des différentes couches et l'ordre dans lequel on les applique permet par ailleurs de s'affranchir des difficultés techniques suivantes :
- dans le cas où elle est réalisée en polycarbonate, la pièce transparente est impossible à traiter pour la protéger des rayonnements ultraviolets, ce qui rend la présence d'au moins une couche de vernis nécessaire.
- une irradiation de la pièce de véhicule qui affecterait la pièce transparente est source de défaut pour la couche de peinture, ce qui nuirait à son aspect et à sa tenue mécanique.
- il est très difficile de faire adhérer une couche de vernis directement sur une autre couche de vernis.

Avantageusement, on fabrique la pièce transparente par moulage d'un plastique, par exemple du polycarbonate, du polypropylène ou du poly(méthacrylate de méthyle).

La pièce transparente est ainsi simple à réaliser et peu onéreuse.

Avantageusement, le rayonnement laser présente une longueur d'onde comprise dans l'infrarouge, de préférence dans l'infrarouge proche.

Un tel rayonnement laser permet d'efficacement éliminer la couche de peinture et la seconde couche de vernis.

Les première et seconde couches de vernis peuvent être réalisées dans un matériau absorbant ou réfléchissant des rayonnements ultraviolets.

On protège ainsi la pièce transparente des rayonnements ultraviolets qui pourraient la détériorer par photodégradation car toute sa surface extérieure est revêtue de la première couche de vernis et, dans une partie, de la seconde couche de vernis.

Avantageusement, les première et seconde couches de vernis sont transparentes à tout rayonnement laser présentant une longueur d'onde comprise dans l'infrarouge proche.

Les couches de vernis peuvent ainsi laisser passer le rayonnement laser sans qu'il n'y ait de risque qu'elles soient détériorées par le rayonnement laser.

Avantageusement, les première et seconde couches de vernis sont réalisées dans le même matériau.

Avantageusement, la couche de peinture comporte une sous-couche de primaire.

La sous-couche de primaire permet d'opacifier la couche de peinture et ainsi d'améliorer son aspect. Sans sous-couche de primaire, il serait nécessaire d'augmenter l'épaisseur de la couche de peinture pour obtenir un rendu similaire, ce qu'il est préférable d'éviter pour des raisons d'aspect (coulure, teinte), de coûts et d'adhérence de la couche de peinture à la pièce transparente. De plus, cela permet d'améliorer l'accroche de la peinture à la pièce transparente tout en permettant d'avoir une couche de vernis dans les zones sans peinture.

Avantageusement, après l'étape d'irradiation, on lustre la pièce de véhicule.

On améliore ainsi la transparence de la pièce de véhicule en limitant les effets de bord des zones irradiées. Spécifiquement, on atténue la forme en escalier des couches qui revêtent la pièce transparente, ce qui contribue à rendre plus homogène son aspect de surface. Cela contribue par ailleurs à favoriser la transmission du faisceau lumineux à travers la pièce de véhicule de manière à maximiser son éclairement du fait de l'absence d'effet dit « loupe » que pourraient engendrer les effets de bord.

On prévoit également selon l'invention une pièce de véhicule obtenue par la mise en oeuvre d'un procédé de fabrication tel que défini dans ce qui précède.

Le procédé de fabrication permet d'améliorer la qualité générale des pièces de véhicule ainsi produites. La gravure par rayonnement laser est effectuée après les deux passages dans la partie « peinture » de la chaine de production, les deux passages correspondant à, d'une part, l'application de la première couche de vernis et, d'autre part, l'application de la couche de peinture et de la seconde couche de vernis. De la sorte, aucune poussière générée par la gravure ne peut polluer l'application des couches de vernis et de peinture. Cela contribue à améliorer la qualité des pièces de véhicules fabriquées. En outre, le fait que la gravure soit réalisée après les passages dans la partie « peinture » de la chaîne de production et non dans une étape intermédiaire de cette parte permet de fluidifier la fabrication de la pièce de véhicule.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en section d'une première étape de la mise en oeuvre d'un procédé de fabrication selon l'invention, et
[Fig. 2] la figure 2 est une vue en section d'une deuxième étape de la mise en oeuvre d'un procédé de fabrication selon l'invention.

### Description détaillée

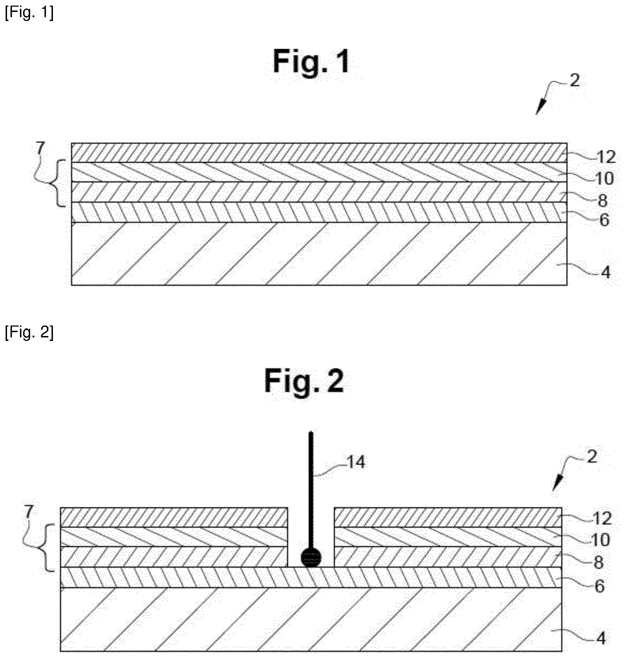

On a représenté sur la figure 1 une première étape d'un procédé de fabrication d'une pièce de véhicule 2.

La pièce de véhicule 2 comprend une pièce transparente 4 destinée à protéger une source de lumière (non représentée). On entend par « transparente » qu'elle est au moins transparente à tout rayonnement lumineux présentant une longueur d'onde comprise dans le spectre visible, c'est-à-dire comprise entre environ 380 et 780 nm. La pièce transparente 4 est ici réalisée dans un plastique présentant cette caractéristique, en l'occurrence du polycarbonate communément désigné « PC ». On peut toutefois prévoir de réaliser la pièce transparente dans un tout autre plastique présentant cette caractéristique, par exemple le polypropylène (PP) ou le poly(méthacrylate de méthyle) (PMMA). La pièce transparente est réalisée par moulage. Un tel procédé étant connu, on ne le détaillera pas davantage dans ce qui suit.

La pièce de véhicule 2 comprend première couche de vernis 6 qui est déposée sur une surface externe de la pièce transparente 4. Par « surface externe », on entend une surface de la pièce transparente qui n'est pas située en regard de la source de lumière et qui est destinée à être exposé à l'environnement extérieur une fois le véhicule fabriqué. La première couche de vernis 6 permet de protéger la pièce transparente 4 de tout rayonnement ultraviolet auquel elle peut être exposée, notamment du soleil. En outre, la première couche de vernis 6 permet de protéger mécaniquement la pièce transparente, notamment pour éviter qu'elle soit rayée ou déformée par des sollicitations extérieures.

La pièce de véhicule 2 comprend une couche de peinture 7 qui est déposée sur la surface externe de la pièce transparente 4, au-dessus de la première couche de vernis 6. Ici, la couche de peinture 7 comporte une sous-couche de primaire 8 sur laquelle est déposée une couche de base 10. La couche de base 10 permet de colorer l'aspect extérieur de la pièce de véhicule 2. La sous-couche de primaire 8 permet d'améliorer l'opacité de la couche de peinture 7 et d'améliorer l'adhérence de la couche de base 10 à la pièce transparente 4.

La pièce de véhicule 2 comprend une seconde couche de vernis 12 qui est déposée sur la surface externe de la pièce transparente 4, au-dessus de la couche de peinture 7. La seconde couche de vernis 12 permet de protéger la pièce transparente 4 et la couche de peinture 7 de tout rayonnement ultraviolet auquel elles peuvent être exposées. Ici, les première et seconde couches de vernis sont réalisées dans le même matériau, mais on peut prévoir d'utiliser deux vernis différents pour réaliser les deux couches 6, 12.

Selon la première étape du procédé de fabrication de la pièce de véhicule 2, on dépose la première couche de vernis 6, puis la couche de peinture 7, puis la seconde couche de vernis 12 sur la pièce transparente 4.

On a représenté en figure 2 une seconde étape du procédé de fabrication de la pièce de véhicule 2. Dans cette étape, on irradie une partie de la pièce de véhicule 2 à l'aide d'un rayonnement laser 14 de manière à graver la couche de peinture 7 et la seconde couche de vernis 12. Cette gravure est effectuée dans toute l'épaisseur de la couche de peinture 7 et de la seconde couche de vernis 12. Cette opération est communément désignée par les termes anglo-saxons « laser-etching » pouvant être traduits par « gravure au laser ». Le rayonnement laser 14 présente une longueur d'onde comprise dans l'infrarouge, c'est-à-dire comprise entre 700 nm et 20000 nm dans le cadre de l'invention. Un exemple de tel rayonnement laser est celui communément désigné « laser CO₂ » qui présente une longueur d'onde de 10600 nm. De préférence, la longueur d'onde du rayonnement laser 14 est comprise dans l'infrarouge proche, c'est-à-dire comprise entre 700 et 2000 nm. Dans ce cas et si les première 6 et seconde 12 couches de vernis sont transparentes au rayonnement laser 14, ce dernier présente l'avantage de ne pas graver les couches de vernis. On évite ainsi un risque d'endommagement des couches de vernis.

L'irradiation est réalisée uniquement dans une partie de la pièce de véhicule 2 dans le sens où elle est réalisée selon un motif prédéfini de la surface externe de la seconde couche de vernis 12. Elle est commandée de sorte que la seconde de couche de vernis 12 et la couche de peinture 7 soit irradiées, donc éliminées dans le motif et dans toute leur épaisseur, mais pas la première couche de vernis 6 qui protège la pièce transparente des rayonnements ultraviolets dans les zones du motif qui ont subi la gravure. Même si la seconde couche de vernis 12 est réalisée dans un matériau transparent au rayonnement laser 14, l'irradiation de la couche de peinture 7 sous-jacente permet d'éliminer la seconde couche de vernis 12 dans le motif.

Après l'irradiation, la surface de la pièce de véhicule 2 présente deux niveaux.

Dans la zone du motif prédéfini, la pièce transparente 4 est revêtue uniquement de la première couche de vernis 6. Dans cette zone, la lumière visible peut être transmise de la source de lumière vers l'environnement extérieur, et inversement.

En dehors de la zone du motif prédéfini, la pièce transparente 4 est revêtue de la première couche de vernis 6, de la couche de peinture 7 et de la seconde couche de vernis 12. Dans cette zone, la lumière visible ne peut être transmise de l'environnement extérieur vers la pièce transparente 4, et inversement, car elle est absorbée par la couche de peinture 7. En particulier, la protection de la pièce transparente 4 aux rayonnements ultraviolets auquel elle peut être exposée est assurée par la seconde couche de vernis 12.

Après cette étape d'irradiation, on peut prévoir une étape supplémentaire de lustrage de la pièce de véhicule 2. Elle permet d'améliorer la transparence dans la zone du motif prédéfini et, de manière plus générale, l'esthétique de la pièce de véhicule 2. En outre, ce lustrage permet d'arrondir les coins formés par la gravure effectuée lors de l'étape d'irradiation, et donc d'améliorer l'esthétique de la pièce de véhicule 2 et son aspect de surface au toucher.

L'invention n'est pas limitée aux modes de réalisation présentés et d'autres modes de réalisation apparaîtront clairement à l'homme du métier.

La source de lumière peut faire partie d'un bloc optique de feux de croisement et de route du véhicule, d'un bloc optique de feux clignotant du véhicule, ou bien d'un bloc optique de feux décoratifs.

Alternativement, la pièce transparente peut intégrer des guides de lumière ou des sources de lumière sans bloc optique, par moulage d'insert, surmoulage, fixation par collage, soudure, rivetage ou tout autre moyen de fixation.

### Liste des références

2 : pièce de véhicule
4. pièce transparente
6 : première couche de vernis
7 : couche de peinture
8 : sous-couche de primaire
10 : couche de base
12 : seconde couche de vernis
14 : rayonnement laser

## Revendications

1. Procédé de fabrication d'une pièce de véhicule (2), **caractérisé en ce qu'**il comprend les étapes suivantes :
- application d'une première couche de vernis (6) sur une pièce transparente (4),
- application d'une couche de peinture (7) sur la première couche de vernis (6),
- application d'une seconde couche de vernis (12) sur la couche de peinture (7), et
- irradiation partielle de la couche de peinture (7) et la seconde couche de vernis (12) avec un rayonnement laser (14) de manière à graver la couche de peinture (7) et la seconde couche de vernis (12).

2. Procédé selon la revendication précédente, dans lequel on fabrique la pièce transparente (4) par moulage d'un plastique, par exemple du polycarbonate, du polypropylène ou du poly(méthacrylate de méthyle).

3. Procédé selon l'une quelconque des revendications précédentes, dans lequel le rayonnement laser (14) présente une longueur d'onde comprise dans l'infrarouge, de préférence dans l'infrarouge proche.

4. Procédé selon l'une quelconque des revendications précédentes, dans lequel les première et seconde couches de vernis (6, 12) sont transparentes à tout rayonnement laser présentant une longueur d'onde comprise dans l'infrarouge proche.

5. Procédé selon l'une quelconque des revendications précédentes, dans lequel les première et seconde couches de vernis (6, 12) sont réalisées dans le même matériau.

6. Procédé selon l'une quelconque des revendications précédentes, dans lequel la couche de peinture (7) comporte une sous-couche de primaire (8).

7. Procédé selon l'une quelconque des revendications précédentes, dans lequel après l'étape d'irradiation, on lustre la pièce de véhicule (2).

8. Pièce de véhicule (2), **caractérisé en ce qu'**elle est obtenue par la mise en oeuvre d'un procédé de fabrication selon l'une quelconque des revendications précédentes.

## Patentansprüche

1. Verfahren zur Herstellung eines Fahrzeugteils (2), **dadurch gekennzeichnet, dass** es die folgenden Schritte umfasst:
- Aufbringen einer ersten Lackschicht (6) auf einem transparenten Teil (4),
- Aufbringen einer Farbschicht (7) auf der ersten Lackschicht (6),
- Aufbringen einer zweiten Lackschicht (12) auf der Farbschicht (7) und
- teilweises Bestrahlen der Farbschicht (7) und der zweiten Lackschicht (12) mit einer Laserstrahlung (14), um die Farbschicht und die zweite Lackschicht (12) zu ätzen.

2. Verfahren nach dem vorhergehenden Anspruch, wobei das transparente Teil (4) durch Gießen eines Kunststoffs, zum Beispiel Polycarbonat, Polypropylen oder Poly(methyl)methacrylat, hergestellt wird.

3. Verfahren nach einem der vorhergehenden Ansprüche, wobei die Laserstrahlung (14) eine Wellenlänge aufweist, die im infraroten Bereich, bevorzugt im nahen infraroten Bereich, liegt.

4. Verfahren nach einem der vorhergehenden Ansprüche, wobei die erste und zweite Lackschicht (6, 12) für jedwede Laserstrahlung transparent sind, die eine Wellenlänge aufweist, die im nahen infraroten Bereich liegt.

5. Verfahren nach einem der vorhergehenden Ansprüche, wobei die erste und zweite Lackschicht (6, 12) aus dem gleichen Material realisiert sind.

6. Verfahren nach einem der vorhergehenden Ansprüche, wobei die Farbschicht (7) eine Grundierungsschicht (8) aufweist.

7. Verfahren nach einem der vorhergehenden Ansprüche, wobei, nach dem Bestrahlungsschritt, das Fahrzeugteil (2) poliert wird.

8. Fahrzeugteil (2), **dadurch gekennzeichnet, dass** es durch Durchführung eines Herstellungsverfahrens nach einem der vorhergehenden Ansprüche erhalten wird.

## Claims

1. A method for manufacturing a vehicle part (2), **characterized in that** it comprises the following steps:
- applying a first varnish coat (6) to a transparent part (4),
- applying a paint coat (7) to the first varnish coat (6),
- applying a second varnish coat (12) to the paint coat (7), and
- irradiating the paint coat (7) and the second varnish coat (12) in part with laser radiation (14) so as to etch the paint coat (7) and the second varnish coat (12).

2. The method according to the preceding claim, wherein the transparent part (4) is manufactured by molding a plastic such as polycarbonate, polypropylene, or poly(methyl methacrylate).

3. The method according to any of the preceding claims, wherein the laser radiation (14) has a wavelength within the infrared, preferably the near infrared.

4. The method according to any of the preceding claims, wherein the first and second varnish coats (6, 12) are transparent to any laser radiation having a wavelength within the near infrared.

5. The method according to any of the preceding claims, wherein the first and second varnish coats (6, 12) are made of the same material.

6. The method according to any of the preceding claims, wherein the paint coat (7) comprises a primer undercoat (8).

7. The method according to any of the preceding claims, wherein the vehicle part (2) is polished after the irradiation step.

8. A vehicle part (2), **characterized in that** it is obtained by implementing a manufacturing method according to any of the preceding claims.
